# EUROPEAN PATENT APPLICATION

(11) **EP 2 400 796 A1**
(43) Date of publication of application: **28.12.2011**
(21) Application number: 10360029.2
(22) Date of filing: 28.06.2010
(51) Int. Cl.: H04W 36/18, H04W 76/04, H04W 72/02

(54) **Radio interface reconfiguration**

(71) Applicant: Alcatel Lucent, 75007 Paris (FR)
(72) Inventor: Horng Wong, Shin, Chippenham Wiltshire, SN14 0S (GB); Cairns, Shaun, Calne Wiltshire SN11 9QZ (GB)
(74) Representative: Coghlan, Judith Elizabeth Kensy

(57) **Abstract**

A method requesting a reconfiguration of a radio interface between user equipment and at least one base station, a method of receiving a request to reconfigure a radio interface between user equipment and a base station, user equipment, a base station and computer program products are disclosed. The method of requesting a reconfiguration of a radio interface between user equipment and at least one base station in a multi-carrier wireless communications system comprising the steps of: determining the reconfiguration to be made by at least one base station; encoding an indication of the reconfiguration together with an indicator in a reconfiguration request message, the indicator indicating a response required by at least one recipient base station on receipt of the reconfiguration request message; and transmitting the reconfiguration request message from the user equipment. This provides a flexible mechanism which enables additional information to be provided on the reconfiguration required. This message can be decoded by all base stations within range of the user equipment, but the indicator indicates which base stations need to respond to the message.

## Description

### FIELD OF THE INVENTION

The present invention relates to a method requesting a reconfiguration of a radio interface between user equipment and at least one base station, a method of receiving a request to reconfigure a radio interface between user equipment and a base station, user equipment, a base station and computer program products.

### BACKGROUND

Single carrier wireless telecommunications systems are known. In those known systems, radio coverage is provided to user equipment, for example mobile telephones, by geographical area. A base station is located in each geographical area to provide the required radio coverage. User equipment in the area served by a base station receives information and data from the base station and transmits information and data to the base station. In a High-Speed Downlink Packet Access (HSDPA) telecommunications network, data and information is sent between user equipment and a base station in data packets on a radio frequency carrier.

Information and data transmitted by the base station to the user equipment occurs on radio frequency carriers known as downlink carriers. Information and data transmitted by user equipment to the base station occurs on radio frequency carriers known as uplink carriers. Hence, in addition to HS-DPA in the downlink, High Speed Uplink Packet Access (HS-UPA) is also provided in the uplink. HS-UPA is also known as Enhanced Uplink.

In known wireless telecommunications systems operating in a single carrier mode, user equipment can move between geographical base station coverage areas. Service provided to user equipment is overseen by a Radio Network Controller (RNC). The RNC communicates with user equipment and base stations and determines which base station each user equipment is primarily connected to. Furthermore, the RNC acts to control and communicate with a base station and user equipment when user equipment moves from the geographical area served by one base station to a geographical area served by another base station.

It has been proposed to allow base stations and user equipment to each transmit simultaneously on more than one carrier. Furthermore, it has been proposed to allow user equipment and base stations to receive simultaneously on more than one carrier. Each carrier, both uplink and downlink, is typically independently power controlled by a base station. Provision of more than one downlink carrier, for example on four frequency carriers, allows for an increase in data throughput to the user equipment. Networks having more than two carriers may be referred to as "Multi Cell High-Speed Downlink Packet Access" (MC-HSDPA) networks. The term "multi-carrier" network used herein is envisaged to cover the case where two (e.g. Dual Cell HSDPA and Dual cell HSUPA), three, four or more downlink (or uplink) carriers are provided for in a network.

The provision of multi-carrier functionality may have associated problems. Accordingly, it is desired to improve the operation of a wireless telecommunications network having multi-carrier functionality.

### SUMMARY

According to a first aspect, there is provided a method of requesting a reconfiguration of a radio interface between user equipment and at least one base station in a wireless communications system, the method comprising the steps of: determining the reconfiguration to be made by the at least one base station; encoding an indication of the reconfiguration together with an indicator in a reconfiguration request message, the indicator indicating a response required by at least one recipient base station on receipt of the reconfiguration request message; and transmitting the reconfiguration request message from the user equipment.

The first aspect recognises that a problem with existing messaging is that no flexible mechanism exists which enables user equipment to initiate a reconfiguration of the radio interface. Although single action messages do exist which provide just a single indication, these are not able to provide any additional information other than just to indicate that a change is required. Also, typically, these single action messages will only be decoded by the serving cell and other base stations that may be affected by a reconfiguration will ignore the message. Accordingly the reconfiguration or change required to the radio interface is determined by the user equipment. This reconfiguration is encoded in the message using an appropriate technique. In addition, an indicator is also encoded in the message. This indicator indicates to receiving base stations whether or not they need to respond to the received message. In this way, a flexible mechanism is provided which enables additional information to be provided on the reconfiguration required. This message can be decoded by all base stations within range of the user equipment, but the indicator indicates which base stations need to respond to the message.

In one embodiment the wireless communications system is a multi-carrier wireless communications system.

In one embodiment, the indicator comprises an acknowledgement request requesting at least one of a serving base station and non-serving base stations acknowledge receipt of the message. Hence, the message may indicate that the message should be acknowledged by only the serving base station, only non-serving base stations, both or none. User equipment can be in Soft Handover (SHO) where it can communicate with more than one base station (or cell). In the uplink a packet sent from the user equipment will reach several base stations and this will increase the chances of the packet being delivered since the packet is successfully received if any of the base station successfully received this packet. This is similar in the downlink. Within this group of base stations (or cells) there is one serving cell that usually has the best radio link with the user equipment. Other base stations (or cells) in the group is termed the non-serving cells and they usually have reduced functionality in communication with the user equipment.

In one embodiment, the indicator comprises an action request requesting at least one of a serving base station and non-serving base stations implement the reconfiguration. Hence, the message may indicate that the reconfiguration should be implemented by only the serving base station, only non-serving base stations, both or none.

In one embodiment, the method comprises the step of spreading the request message with a predetermined spreading code indicative of the reconfiguration request message. Hence, the spreading code may be used to indicate that the received bit stream relates to a request message.

In one embodiment, the step of encoding comprises encoding an identifier indicative of the reconfiguration request message using a predetermined Enhanced Dedicated Channel Transport Format Combination Identifier. Hence, the Enhanced Dedicated Channel Transport Format Combination Identifier may be used to indicate that the message is a request message.

In one embodiment, the reconfiguration request message comprises at least two parts and the step of transmitting comprises transmitting the first part on an uplink control channel and transmitting the second part on an uplink data channel. Accordingly, the message may be split across more than one channel in any convenient manner.

In one embodiment, the first part comprises at least the indicator indicating the response and the second part comprises at least a cyclic redundancy check field. It will be appreciated that in embodiments, the first or second part may comprise any of the indication of the reconfiguration, the indicator indicating the response and the cyclic redundancy check.

In one embodiment, the uplink control channel comprises an Enhanced Dedicated Channel Dedicated Physical Control Channel (E-DPCCH) and the uplink data channel comprises at least one Enhanced Dedicated Channel Dedicated Physical Data Channel (E-DPDCH).

In one embodiment, the step of transmitting comprises transmitting the reconfiguration request message using at least one dedicated uplink reconfiguration request channel.

In one embodiment, the step of encoding comprises encoding the indication of the reconfiguration and the indicator indicating the response required in a level two message, and the step of transmitting comprises transmitting comprises transmitting the level two message encoding the reconfiguration request message.

In one embodiment, the reconfiguration comprises at least one of activating at least one carrier, deactivating at least one carrier, changing primary carrier, changing of serving cell, change between normal transmission and discontinuous transmission, and change between normal reception and discontinuous reception.

In one embodiment, the method comprises the step of: receiving a request from a base station to reconfigure the radio interface and wherein the step of determining comprises determining the reconfiguration to be made by the at least one base station in response to the request.

In one embodiment, the indication of the reconfiguration is encoded using at least 6 bits.

According to a second aspect, there is provided user equipment operable to request a reconfiguration of a radio interface between the user equipment and at least one base station in a wireless communications system, the user equipment comprising: determining logic operable to determine the reconfiguration to be made by at least one base station; encoding logic operable to encode an indication of the reconfiguration together with an indicator in a reconfiguration request message, the indicator indicating a response required by at least one recipient base station on receipt of the reconfiguration request message; and transmission logic operable to transmit the reconfiguration request message from the user equipment.

In one embodiment the wireless communications system is a multi-carrier wireless communications system.

In one embodiment, the indicator comprises an acknowledgement request requesting at least one of a serving base station and non-serving base stations acknowledge receipt of the message.

In one embodiment, the indicator comprises an action request requesting at least one of a serving base station and non-serving base stations implement the reconfiguration.

In one embodiment, the user equipment comprises spreading logic operable to spread the request message with a predetermined spreading code indicative of the reconfiguration request message.

In one embodiment, the encoding logic is operable to encode an identifier indicative of the reconfiguration request message using a predetermined Enhanced Dedicated Channel Transport Format Combination Identifier.

In one embodiment, the reconfiguration request message comprises at least two parts and the transmission logic is operable to transmit the first part on an uplink control channel and transmitting the second part on an uplink data channel.

In one embodiment, the first part comprises at least the indicator indicating the response and the second part comprises at least a cyclic redundancy check field. It will be appreciated that in embodiments, the first or second part may comprise any of the indication of the reconfiguration, the indicator indicating the response and the cyclic redundancy check.

In one embodiment, the uplink control channel comprises an Enhanced Dedicated Channel Dedicated Physical Control Channel (E-DPCCH) and the uplink data channel comprises at least one Enhanced Dedicated Channel Dedicated Physical Data Channel (E-DPDCH).

In one embodiment, the transmission logic is operable to transmit the reconfiguration request message using at least one dedicated uplink reconfiguration request channel.

In one embodiment, the encoding logic is operable to encode the indication of the reconfiguration and the indicator indicating the response required in a level two message, and the transmission logic is operable to transmit the level two message encoding the reconfiguration request message.

In one embodiment, the reconfiguration comprises at least one of activating at least one carrier, deactivating at least one carrier, changing primary carrier, changing of serving cell, change between normal transmission and discontinuous transmission, and change between normal reception and discontinuous reception.

In one embodiment, the user equipment comprises reception logic operable to receive a request from a base station to reconfigure the radio interface and the determining logic is operable to determine the reconfiguration to be made by the at least one base station in response to the request.

According to a third aspect, there is provided a method of receiving a request to reconfigure a radio interface between user equipment and a base station in a wireless communications system, the method comprising the steps of: receiving a reconfiguration request message from the user equipment; decoding an indication of the reconfiguration together with an indicator from the reconfiguration request message, the indicator indicating a response required by the base station on receipt of the reconfiguration request message; and determining from the indicator whether a response is required to the reconfiguration request message.

In one embodiment the wireless communications system is a multi-carrier wireless communications system.

In one embodiment, the indicator comprises an acknowledgement request and when the acknowledgement request provides an indicator which matches a base station type, the method comprises the step of transmitting an acknowledgement to the user equipment.

In one embodiment, the indicator comprises an action request and when the action request provides an indicator which matches a base station type, the method comprises the step of implementing the reconfiguration.

In one embodiment, the method comprises the step of determining the presence of the reconfiguration request message by detecting a message encoded with a predetermined spreading code indicative of the reconfiguration request message.

In one embodiment, the method comprises the step of determining the presence of the reconfiguration request message by detecting an identifier indicative of the reconfiguration request message using a predetermined Enhanced Dedicated Channel Transport Format Combination Identifier.

In one embodiment, the step of receiving comprises receiving the reconfiguration request message comprising at least two parts, the first part being received on an uplink control channel and the second part being received on an uplink data channel.

In one embodiment, the first part comprises at least the indicator indicating the response and the second part comprises at least a cyclic redundancy check field. It will be appreciated that in embodiments, the first or second part may comprise any of the indication of the reconfiguration, the indicator indicating the response and the cyclic redundancy check.

In one embodiment, the uplink control channel comprises an Enhanced Dedicated Channel Dedicated Physical Control Channel (E-DPCCH) and the uplink data channel comprises at least one Enhanced Dedicated Channel Dedicated Physical Data Channel (E-DPDCH).

In one embodiment, the step of receiving comprises receiving the reconfiguration request message using at least one dedicated uplink reconfiguration request channel.

In one embodiment, the step of receiving comprises receiving the reconfiguration request message in a level two message encoding the reconfiguration request message.

In one embodiment, the reconfiguration comprises at least one of activating at least one carrier, deactivating at least one carrier, changing primary carrier, changing of serving cell, change between normal transmission and discontinuous transmission, and change between normal reception and discontinuous reception.

According to a fourth aspect, there is provided a base station operable to receive a request to reconfigure a radio interface between user equipment and a base station in a wireless communications system, the base station comprising: reception logic operable to receive a reconfiguration request message from the user equipment; decoding logic operable to decode an indication of the reconfiguration together with an indicator from the reconfiguration request message, the indicator indicating a response required by the base station on receipt of the reconfiguration request message; and determining logic operable to determine from the indicator whether a response is required to the reconfiguration request message.

In one embodiment the wireless communications system is a multi-carrier wireless communications system.

In one embodiment, the indicator comprises an acknowledgement request and when the acknowledgement request provides an indicator which matches a base station type, the method comprises the step of transmitting an acknowledgement to the user equipment.

In one embodiment, the indicator comprises an action request and when the action request provides an indicator which matches a base station type, the method comprises the step of implementing the reconfiguration.

In one embodiment, the base station comprises determining logic operable to determine the presence of the reconfiguration request message by detecting a message encoded with a predetermined spreading code indicative of the reconfiguration request message.

In one embodiment, the base station comprises determining logic operable to determine the presence of the reconfiguration request message by detecting an identifier indicative of the reconfiguration request message using a predetermined Enhanced Dedicated Channel Transport Format Combination Identifier.

In one embodiment, the reception logic is operable to receive the reconfiguration request message comprising at least two parts, the first part being received on an uplink control channel and the second part being received on an uplink data channel.

In one embodiment, the first part comprises at least the indicator indicating the response and the second part comprises at least a cyclic redundancy check field. It will be appreciated that in embodiments, the first or second part may comprise any of the indication of the reconfiguration, the indicator indicating the response and the cyclic redundancy check.

In one embodiment, the uplink control channel comprises an Enhanced Dedicated Channel Dedicated Physical Control Channel (E-DPCCH) and the uplink data channel comprises at least one Enhanced Dedicated Channel Dedicated Physical Data Channel (E-DPDCH).

In one embodiment, the reception logic is operable to receive the reconfiguration request message using at least one dedicated uplink reconfiguration request channel.

In one embodiment, the reception logic is operable to receive the reconfiguration request message in a level two message encoding the reconfiguration request message.

In one embodiment, the reconfiguration comprises at least one of activating at least one carrier, deactivating at least one carrier, changing primary carrier, changing of serving cell, change between normal transmission and discontinuous transmission, and change between normal reception and discontinuous reception.

According to a fifth aspect, there is provided a computer program product operable, when executed on a computer, to perform the method steps of the first aspect.

According to a sixth aspect, there is provided a computer program product operable, when executed on a computer, to perform the method steps of the third aspect.

Further particular and preferred aspects are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further, with reference to the accompanying drawings, in which:
Figure 1 illustrates a wireless telecommunications system according to one embodiment;
Figure 2 illustrates communication layers between the network and the User Equipment;
Figure 3 illustrates an example uplink order message according to one embodiment;
Figure 4 illustrates the arrangement of an Enhanced Dedicated Channel;
Figure 5 illustrates an example uplink order message according to one embodiment;
Figure 6 illustrates an example uplink order message according to one embodiment;
Figure 7 illustrates an example uplink order message according to one embodiment;
Figure 8 illustrates an example uplink order message according to one embodiment;
Figures 9 and 10 illustrate an example operation of the network when utilising uplink orders; and
Figures 11 and 12 illustrate an example operation of the network when utilising uplink orders.

### DESCRIPTION OF THE EMBODIMENTS

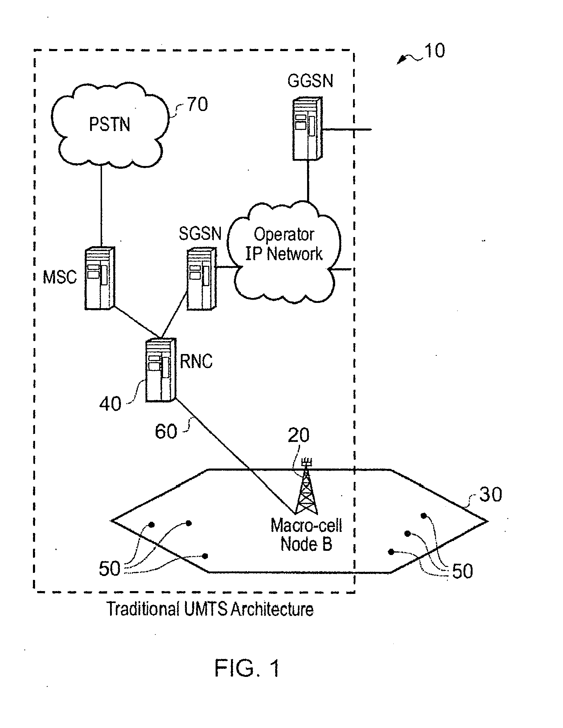

Figure 1 illustrates a wireless telecommunications system 10 according to one embodiment. User equipment 50 roam through the wireless telecommunications system. Base stations 20 are provided which support areas of radio coverage 30. A number of such base stations 20 are provided and are distributed geographically in order to provide a wide area of coverage to user equipment 50. When user equipment is within an area served by a base station 30, communications may be established between the user equipment and the base station over associated radio links. Each base station typically supports a number of sectors within the geographical area of service 30.

Typically a different antenna within a base station supports each associated sector. Accordingly, each base station 20 has multiple antennas and signals sent through the different antennas are electronically weighted to provide a sectorised approach. Of course, it will be appreciated that Figure 1 illustrates a small subset of the total number of user equipment and base stations that may be present in a typical communications system.

The radio access network of the wireless communications system is managed by a radio network controller (RNC) 40. The radio network controller 40 controls operation of the wireless communications system by communicating with a plurality of base stations over a backhaul communications link 60. The network controller also-communicates with user equipment 50 via each base station.

A radio network controller 40 maintains a neighbour list which includes information about geographical relationships between sectors supported by base stations 20. In addition, the radio network controller 40 maintains location information which provides information on the location of user equipment 50 within the wireless communication system 10. The radio network controller is operable to route traffic via circuit switched and packet switched networks. Hence, a mobile switching centre is provided with which the radio network controller may communicate. The mobile switching centre can communicate with a circuit switched network such as a public switched telephone network (PSTN) 70. Similarly, a network controller can communicate with service general package radio service support nodes (SGSNs) and a gateway general packet support node (GGSN). The GGSN can communicate with a packet switched core such as for example, the Internet.

User equipment 50 typically transmits information and data to a base station 20 so that it can be re-routed within a wireless telecommunications network. User equipment may, for example, need to transmit data to the base station in order to relay text messages, voice information when a user is using the equipment to make a telephone call, or other data. The base station 20, in combination with parameters set by the radio network controller 40, allocates resources to user equipment in a manner that aims to optimise operation of the wireless telecommunications network 10.

In Universal Mobile Telecommunications System (UMTS), a Multi-Cell High Speed Downlink Packet Access (MC-HSDPA) arrangement is provided. In MC-HSDPA, a sector is defined as the geographical coverage area of a base station or Node B. A sector can consist of several cells, where each cell aims to cover the same geographical coverage as the sector and uses a separate frequency carrier for its transmission. The frequency carrier can be within the same frequency band or distributed over two frequency bands. MC-HSDPA is an extension to Dual Cell High Speed Downlink Packet Access (DC-HSDPA). In MC-HSDPA, user equipment can receive up to four simultaneous downlink transmissions from four different cells. Hence, MC-HSDPA can potentially double and quadruple the downlink throughput of DC-HSDPA and (Single Cell) HSDPA respectively. MC-HSDPA is also sometimes referred to as 4C-HSDPA (four Cell HSDPA) or 3C-HSDPA when the user equipment receives simultaneous transmissions from four or three cells respectively.

In a multi-carrier system, each carrier will have independent downlink radio links from a base station to user equipment. Those downlink radio links are managed independently since each carrier will likely have different radio propagation paths to user equipment. For HSDPA systems capable of operating in multi-carrier mode, more than two downlink carriers may be provided. It will be appreciated that in a multi-carrier network, the number of downlink carriers may not match the number of uplink carriers. Furthermore, the number of downlink carriers provided may not be exactly double the number of uplink carriers provided. In HSDPA multi-carrier mode, each sector served by a base station can have several carrier frequencies or "carriers" associated therewith. A carrier or cell supported by a carrier covers the same geographical region as a sector. Each cell is served by a different carrier frequency. It will therefore be understood that in a single carrier system, a cell is equivalent to a sector since a sector has only one cell or carrier frequency. Nonetheless, in a multi-carrier network each sector may comprise several cells each cell being served simultaneously by a different carrier frequency.

In MC-HSDPA, the primary carrier is the cell that carries essential control channels and it cannot be deactivated. There is only one primary carrier and the other cells are called secondary carriers (e.g. Secondary Carrier 1, Secondary Carrier 2 and Secondary Carrier 3).

Control of the carriers can be effected using an HS-SCCH (High Speed Shared Control Channel) order. The HS-SCCH order is layer 1 signalling from the supporting base station to user equipment that allows fast commands/orders to be made. Apart from deactivation/activation of secondary carriers, HS-SCCH orders can also be used to turn on discontinuous transmission and reception.

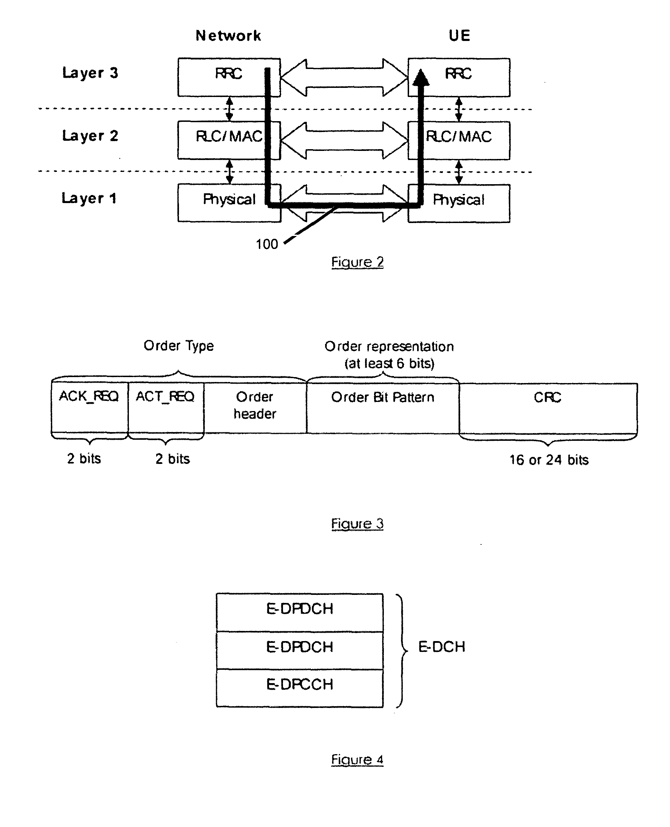

Generally, communications between nodes happen over several layers. In the HSPA Radio Access Network (RAN), there are 3 layers of communication between the network and the User Equipment as shown in Figure 2. Layer 3 is the Radio Resource Control (RRC), Layer 2 consists of the Radio Link Control and the Medium Access Control and Layer 1 is the Physical Layer. Each layer in the network or User Equipment will send messages intended only to the same layer in the User Equipment or network. For example, a RRC message (Layer 3 message) from the network is only intended for the RRC at the User Equipment. Apart from the Physical Layer (Layer 1), all other layers' messages cannot be sent directly to the corresponding layer on the other node. For example a Layer 3 message from the network needs to pass through Layer 2 and Layer 1 before it can be sent to the User Equipment. At the User Equipment the message is received at Layer 1 and passes through Layer 2 before reaching its destination in Layer 3. The path taken by this Layer 3 message in this example is shown in the arrow 100 in Figure 2.

Usually, the RRC layer at the network sends configuration messages to order the User Equipment to perform certain task (e.g. handover to another cell). The RRC layer is controlled by the Radio Network Controller 40, which is physically separated from the Node B (NB). Hence RRC messages are usually slow. The orders can be speeded up by sending these orders from the base station at the Physical layer (i.e. Layer 1) since the base station can directly communicate with the User Equipment at the Physical layer. In HSPA, HS-SCCH (High Speed Shared Control Channel), a Layer 1 message, is used to carry orders to the User Equipment. The HS-SCCH order enables decisions made at the base station and network to reach the User Equipment quickly. Features like Fast Serving Cell Change allowing the User Equipment to quickly handover to a cell benefits from having HS-SCCH orders. The HS-SCCH order is also used to turn on/off the Discontinuous Transmission (DTX) and Discontinuous Reception (DRX) feature in the User Equipment. In 4 Carrier HSDPA (4C-HSDPA), the HS-SCCH order is used to activate or deactivate secondary carriers in the User Equipment.

The HS-SCCH order is sent from the base station to the user equipment. It is beneficial to the User Equipment if it can also send a Layer 1 message to carry an order or a request to the base station. For example, a 4C-HSDPA User Equipment may wish to request that the base station deactivates a secondary carrier to conserve battery. Currently, uplink Layer 1 messages are only intended for Layer 1 functionalities (e.g. Transmit Power Control command) rather than an order that may involve configuration in other layers.

Unlike the HS-SCCH order, in addition to being received the serving cell, any uplink order also needs to be received by non-serving cells (i.e. cells participating in soft handover that are not the main serving cell). A drawback of the HS-SCCH order is that the base station needs to inform the non-serving cells via the RNC 40 of any changes to a user equipment, which causes delay. An example of this is the activation/deactivation of an uplink secondary carrier in DC-HSUPA (Dual Cell High Speed Uplink Packet Access), where the base station needs to inform the RNC 40 of the activation/deactivation so that the RNC 40 can propagate this information to all the non-serving cells belonging to the user equipment. Hence, for orders/requests that affects non-serving cell, it is important that the uplink order also reaches all non-serving cells.

Hence, the present technique provides a mechanism that enables the User Equipment to send a Layer 1 or Layer 2 order or request to the network. This can be achieved in a variety of different ways as will be explained in more detail below.

Each Uplink Order typically needs one or more of the following fields/information:
o An identifier to identify the user equipment that sent the Uplink Order;
o Order Type: The Order Type will tell whether an acknowledgement is required by the serving and/or non-serving cell and whether an action is required by the serving and/or non-serving cell;
o Order representation. A bit patterns to represent the specific orders;
o Checksum. A way for the base station to ensure that it has correctly received the order.

It is important that some uplink orders are acknowledged by the network. The existing E-HICH (E-DCH Hybrid ARQ Indicator Channel) can be used to acknowledge an uplink order. Similarly to HS-SCCH orders, an uplink order should not be sent together with an E-DCH carrying user information since this will cause confusion in the acknowledgements from the network. The existing E-HICH is also sent by non-serving cell, which can be used to acknowledge an uplink order. For orders or requests that do not affect the non-serving cells (e.g. a request to deactivate a secondary carrier in 4C-HSDPA), the user equipment can ignore acknowledgements from non-serving cells (or non-serving need not send acknowledgement for these types of orders/requests). For orders or requests that affect the non-serving cell, the user equipment will need to wait for acknowledgements from all serving and non-serving cells before it can execute it can proceed with the orders/requests.

The Uplink Order can also include indication whether any actions are required by the serving or non-serving cell. No actions may be required by either the serving or non-serving cell if the Uplink Order is used to pass information to a group of non-serving cells. Also it can indicate whether an acknowledgement is required from the serving or non-serving cell. This will reduce unnecessary acknowledgements from the networks.

The Uplink Order needs to be sent at a power that can reach the non-serving cell that has the poorest radio condition. For example, the Uplink Order can be send at X dB higher than what it needs to send to the serving cell. The value X can be configured by the network.

### Implementation 1 - New Physical Channel

In this implementation, a new physical channel is provided to carry uplink order and/or requests. The uplink order channel utilises a newly defined format or may reuse an existing physical channel format. Reusing an existing format has the advantage that its link performance need not be conformance tested since it will have the same link performance of the existing format, which is tested. However, in that case, the uplink order will be limited to the number of information bits of the existing physical channel.

The current HS-SCCH order has only 6 bits to represent an order giving a maximum of 64 different orders. These different orders are quickly being used up especially when 4C-HSDPA + 4C-HSUPA are introduced where 27 orders are required for activation/deactivation of 4 downlink & uplink carriers. Hence, the newly defined physical channel for the uplink order should contain at least 6 bits to represent the orders/requests. A new spreading code will be provided to encode the message. Existing or new encoding/decoding schemes can be used. Similar to HS-SCCH order, the uplink order should contain a CRC (Cyclic Redundancy Check) for error detection to avoid misinterpreting an order. An acknowledgement may also required from the base station when an order is received.

The existing HS-SCCH order format can be reused in the uplink to carry the uplink order since it already has most of the elements required of an order. However, since the HS-SCCH is designed to be decoded for the user equipment, its performance may need to be tested at the base station. A new encoding chain may also be required at the user equipment.

Advantages of this implementation are that there is flexibility over the number of bits provided in the message; and encoding and decoding can be made more efficient. Disadvantages are that the base station needs a new decoder chain; the user equipment needs a new encoder chain; the base station requires a new searcher (to look out for this new channel); and new conformance tests are required to test this channel.

An example format is shown in Figure 3. Here:
o ACK_REQ consists of 2 bits and is used to indicate whether an acknowledgement is required by the serving or non-serving cell. This is as described in more detail below.
o ACT_REQ consists of 2 bits whether an action is required by the serving or non-serving cell. This is as described in more detail below.
o Additional Order headers.
o Order representation. Each unique bit pattern defines an associated order.
o CRC checksum. The CRC checksum can be 16 or the existing 24 bits used in E-DPDCH

Since this is a layer 1 message, the UE is identified by the scrambling code used.

### Implementation 2 - Utilisation of E-DPCCH and E-DPDCH with Modification

E-DCH (Enhanced Dedicated Channel) is a transport channel that carries user data for HS-UPA. It consists of the E-DPCCH (E-DCH Dedicated Physical Control Channel) and one or more E-DPDCH (E-DCH Dedicated Physical Data Channel) as shown in Figure 4. Both physical channels in E-DCH are designed to operate in soft handover and so non-serving cells already have the capability to decode them. E-DPDCH carries user information, whilst E-DPCCH carries control information including decoding instruction for the attached E-DPDCH. To avoid having additional conformance tests the uplink order can reuse the existing E-DPCCH format. E-DPCCH consists of 10 information bits, which can be used to represent the uplink orders/requests. However, E-DPCCH does not contain error checks since it is part of E-DCH which contains a 24 bit CRC as part of its encoding. This CRC is carried by the E-DPDCH. To enable error detection, the uplink order using the E-DPCCH can be sent together with an optional E-DPDCH that carries the CRC. The E-DPDCH can be optional since some uplink orders or requests may not require CRC (e.g. request to deactivate a secondary carrier in 4C-HSPA). A reduced set of E-TFCI can be used for the E-DPDCH and it can carry additional information for the uplink order. The E-DPCCH carrying the uplink order is spread with a separate spreading code to the one use by the existing E-DPCCH so that the base station can differentiate between the two.

Hence, this implementation reuses the existing E-DPCCH and E-DPDCH pair with modification. The E-DPCCH will use a different spreading code to differentiate itself from the existing E-DPCCH. The corresponding E-DPDCH can be optional (indicated in the E-DPCCH) and, if it is sent, several different formats can be used in the E-DPDCH.

The advantages of this implementation are that a flexible sized order can be used; no new decoder or encoder chain is required; and no new conformance tests are required. Disadvantages are that the base station requires a new searcher (to look out for the new spreading code); and the base station needs to decode two channels to get to the order.

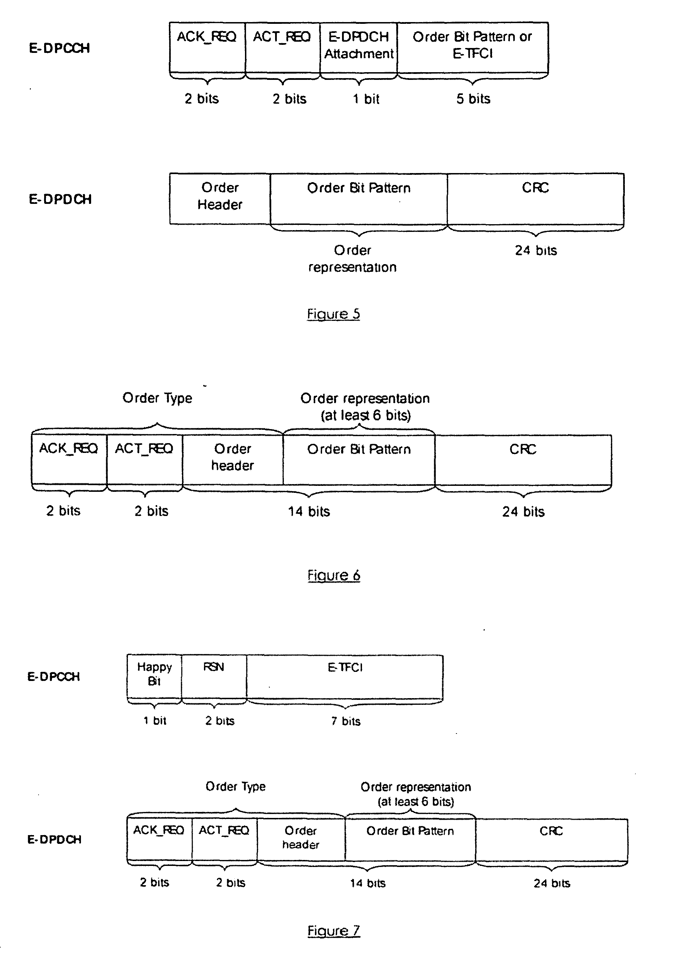

An example format is shown in Figure 5. Here:
o On the E-DPCCH: ACK_REQ consisting of 2 bits are used to indicate whether an acknowledgement is required by the serving or non-serving cell, as will be described in more detail below.
o On the E-DPCCH: ACT_REQ consisting of 2 bits are used to indicate whether an action is required by the serving or non-serving cell, as will be described in more detail below.
o On the E-DPCCH: E-DPDCH attachment. 1 bit is used to indicate whether there is an E-DPDCH attached to this order.
o On the E-DPCCH: Order or E-TFCI. 5 bits to represent the order if there is no E-DPDCH attachment. Otherwise, this would be the E-TFCI used in the attached E-DPDCH.
o On the E-DPDCH: Order header.
o On the E-DPDCH: Order representation.
o On the E-DPDCH: 24 bits CRC.

The ACK_REQ and ACT_REQ are sent on the E-DPCCH since the base station will decode the E-DPCCH first. This will allow the serving and non-serving cells to decide whether they need to decode the attached E-DPDCH (if there is one). For example, if ACT_REQ indicate no action required from non-serving cell, the non-serving cell will not further decode the E-DPDCH.

Since this is a layer 1 message, the user equipment is identified by the scrambling code used.

### Implementation 3 - Utilisation of Standalone E-DPDCH

The utilisation of E-DPCCH with an attached E-DPDCH mentioned above results in the base station having to decode two physical channels (albeit the base station may already currently doing this). Also, additional power is required to carry two physical channels for an uplink order. To avoid this, the uplink order can use a standalone E-DPDCH. Here the E-DPDCH uses a fixed E-TFCI, spreading factor (SF) and spreading code so that it can be decoded without any instruction from E-DPCCH. The uplink order can use the smallest transport block size for E-DPDCH of 18 bits (E-TFCI = 0), which is more than the existing HS-SCCH order. However, other predetermined E-TFCIs could be used. The existing (24 bits) CRC in E-DPDCH can be reused for error detection. E-TFCI = 0 is initially designed to carry MAC Scheduling Information, which is robust and therefore suitable to carry the uplink order.

The existing conformance test in 3GPP tests only the performance of the E-DCH (Enhanced Dedicated Channel) channel but not its components, the E-DPDCH or the E-DPCCH. Additional testing is not required for a standalone E-DPDCH since it is expected to perform better than the E-DCH (i.e. combined E-DPDCH and E-DPCCH). This is because a failure in E-DPCCH would result in a failure in E-DPDCH since the base station will have lost the decoding instruction. An uplink order using standalone E-DPDCH would have a known decoding instruction at the base station, which is equivalent to a perfect E-DPCCH.

The E-DPDCH will use a different spreading code and a fixed format so that the base station knows how to look for it and decode it. An example format is the format used in E-TFCI=O that has 18 bits.

The advantages of this implementation are that no new decoder or encoder chain is required; no new conformance tests are required; and the base station decodes only 1 channel. Disadvantage are that the base station requires a new searcher (to look out for the new spreading code); and the uplink order is of fixed size.

An example format is shown in Figure 6. Here:
o ACK_REQ consisting of 2 bits are used to indicate whether an acknowledgement is required by the serving or non-serving cell, as described in more detail below.
o ACT_REQ consisting of 2 bits are used to indicate whether an action is required by the serving or non-serving cell, as described in more detail below.
o Order representation. Each bit pattern defines an order (at least 6 bits).
o 24 bit CRC checksum.

Order header and Order representation together consists of 14 bits. Since this is a layer 1 message, the UE is identified by the scrambling code used.

### Implementation 4 - Utilisation of E-DPCCH and E-DPDCH without Modification

As mentioned above, an E-DPCCH or a standalone E-DPDCH with a different spreading code will require an additional detector/searcher at the base station to detect this channel. To avoid this, the existing E-DCH can be reused. Here the unused E-TFCI bits in the E-DPCCH are used to indicate that the corresponding E-DPDCH is an uplink order. Similar to the standalone E-DPDCH, the E-DPDCH here will use a fixed spreading factor and fixed transport block size. Although different tables have different unused E-TFCI, the base station can be programmed to recognise specific E-TFCI (i.e. the unused ones) in each table as an indication that the corresponding E-DPDCH is an uplink order. However, this method would only generally be applicable in 2 ms TTI HSUPA since unused E-TFCIs currently only exist in 2ms TTI HSUPA.

Hence this implementation is similar to implementation 2 where the existing E-DPCCH & E-DPDCH pair is reused. However, no new spreading code is used to differentiate it from the existing E-DPCCH & E-DPDCH. The unused E-TFCI bit patterns are used to indicate that the corresponding E-DPDCH is an uplink order. The E-DPDCH typically uses a fixed format and preferably an existing one (e.g. E-TFCI=O).

Advantages of this implementation are that no new searcher is required; no new decoder or encoder chain is required; and no new conformance tests are required. Disadvantages are that this approach may only be applicable in 2 ms TTI option since only 2 ms TTI currently has unused E-TFCI bit patterns; the uplink order will be of fixed size since only 1 unused bit pattern can be used; and the base station decodes two channels to get to the order.

An example format is shown in Figure 7. Here:
o there are no changes on the E-DPCCH, the existing Happy Bits, Retransmission Sequence Number (RSN) and E-TFCI are unchanged. The unused E-TFCI bit patterns are used to indicate that the attached E-DPDCH is an uplink order
o The E-DPDCH assumes, for example, the format of E-TFCI=O which consist of 18 bits. The structure hence is similar to that of the standalone E-DPDCH.

Since this is a layer 1 message, the user equipment is identified by the scrambling code used.

### Implementation 5 - Layer 2 Modification

In addition to having a Layer 1 physical channel implementation, a Layer 2 channel message such as a short RLC or MAC message can also be used to carry the Uplink Order. In HSPA, the Layer 2 resides at the base station and hence a Layer 2 message from the user equipment does not need to go through the RNC 40 in order to reach the UE's non-serving cells. Furthermore, the MAC message can be carried by an existing uplink channel (e.g. the E-DCH) thereby avoiding any additional conformance performance tests.

For example, the uplink order is carried by the Layer 2 MAC message. The MAC message should contain a header field indicating it is an order (i.e. with radio reconfiguration), an identifier to identify the user equipment sending the order and the order itself. Since this order is at Layer 2, it can be carried by existing physical channels.

Advantages of this implementation are that the order is flexible in size; no new searcher is required; no new decoder or encoder chain are required; no new conformance tests are required. Disadvantages are that the uplink order is slow in reaching the base station, since this is at Layer 2; acknowledgement are likely to be slow (likely RLC acknowledgements - user equipment can be implemented to treat layer 1 acknowledgements (e.g. E-HICH) for this case as Layer 2 acknowledgement).

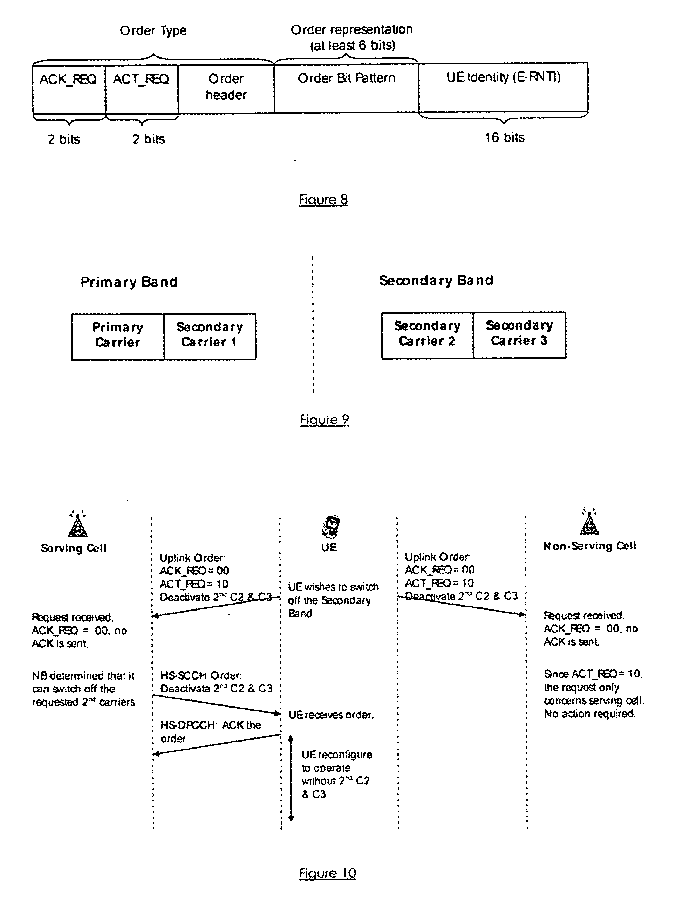

An example format is shown in Figure 8. Here:
o ACK_REQ consisting of 2 bits are used to indicate whether an acknowledgement is required by the serving or non-serving cell, as will be described in more detail below.
o ACT_REQ consisting of 2 bits whether an action is required by the serving or non-serving cell, as will be described in more detail below.
o Additional Order headers.
o Order representation. Each bit pattern defines an order.
o UE identity. Here the UE 16 bits E-RNTI is used.

This layer 2 message can be carried by E-DPDCH and hence a checksum is not required since the physical layer (i.e. E-DPDCH) would have already performed the checksum.

### Example Operation - Scenario 1

Figures 9 and 10 illustrate an example operation of the network when utilising uplink orders. In this example, the Uplink Order is carried by the existing E-DCH channel and is indicated by an unused E-TFCI. The E-DPDCH decoding instruction is fixed, is known to the base station and can be as follows:
1) Spreading Factor (SF) 256;
2) E-TFCI = 0 (18 info bits).

Some Uplink Orders or requests do not require acknowledgements and so two bits (out of the 18 available bits) are used to indicate whether an acknowledgement is required by the serving and/or non-serving cells. For reference, these two bits are called ACK_REQ, where, in this example (other encoding techniques may be utilised):
o ACK_REQ = "00" means no acknowledgement required from serving and non-serving cells;
o ACK_REQ = "01" means acknowledgement required from non-serving cells only;
o ACK_REQ = "10" means acknowledgement required from serving cell only;
o ACK_REQ = "11" means acknowledgement required from serving cell and non-serving cells.

A further two bits are used to indicate whether an action is required of the serving and/or non-serving cells. For reference, these two bits are called ACT_REQ, where, in this example (other encoding techniques may be utilised):
o ACT_REQ = "00" means no actions required by serving and non-serving cells. This may be sent as information only;
o ACT_REQ = "01" means only the non-serving cells need to perform an action;
o ACT_REQ = "10" means only the serving cell needs to perform an action;
o ACT_REQ = "11" means the serving and non-serving cells need to perform an action.

Assume now that the user equipment is operating in 4C-HSDPA across two frequency bands as shown in Figure 9. The user equipment wishes to save battery power and decides to turn off the secondary carriers (Secondary Carrier 2 & 3) in the Secondary Band.

As shown in Figure 10, the user equipment sends a request to its base station via the Uplink Order with the ACK_REQ = "00" since this is just a request and an action from the serving cell acts as an acknowledgement to the order. ACT_REQ is set to "10" since only an action (i.e. HS-SCCH order) is required of the serving cell. The serving and non-serving cells receive the Uplink Order. Since ACK_REQ = "00", no acknowledgement is sent by the cells. Since ACT_REQ = "10", this request only concerns the serving cell and hence no action is required by the non-serving cell. The serving cell determines that it can safely deactivate secondary carrier 2 & 3 and sends a HS-SCCH order to deactivate these carriers. The user equipment acknowledges the order and proceeds to deactivate the target carriers.

### Example Operation - Scenario 2

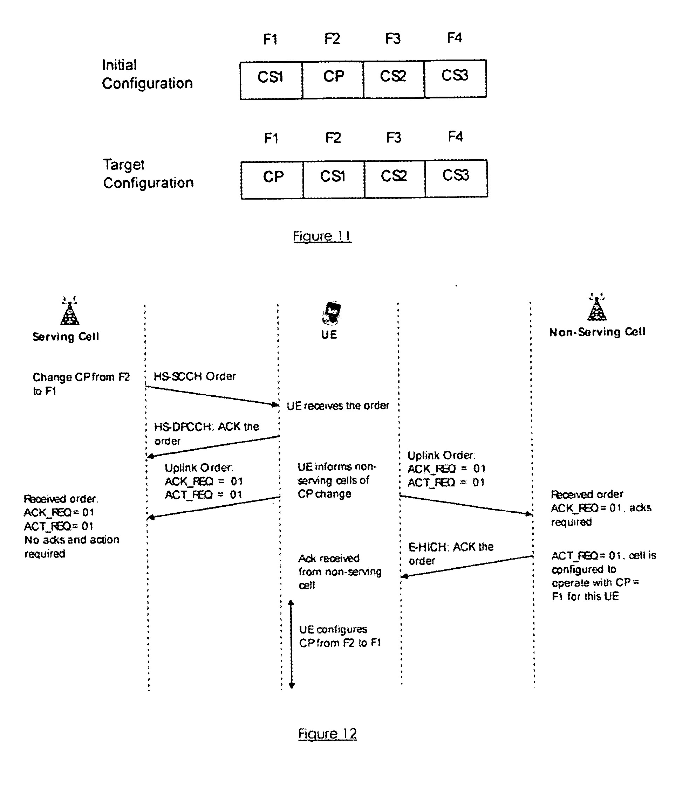

Figures 11 and 12 illustrate an example operation of the network when utilising uplink orders. In this example, the same Uplink Order as in scenario 1 is used. A 4C-HSDPA UE has the following carrier to frequency configuration as shown as "Initial Configuration" in Figure 1. Here, CP refers to the primary carrier and CS1, CS2 and CS3 refer to the secondary carrier 1, secondary carrier 2 and secondary carrier 3 respectively. In Figure 11, the CP is initially attached to frequency F2. In this example, it is assumed that it is possible in a 4C-HSDPA network, for the base station to change the primary carrier of user equipment to one of its active secondary carrier via a HS-SCCH order. The base station (i.e. the serving cell) decides to change the CP from F2 to F1 as shown as the "Target Configuration" in Figure 11.

The base station sends a HS-SCCH order to change the primary carrier as shown in the signalling diagram in Figure 12. The user equipment receives the HS-SCCH order and sends an acknowledgement to the base station, which is the serving cell. Since a change of primary cell affects the non-serving cells, the user equipment sends an Uplink Order to inform the non-serving cell of the change in primary carrier. Both the ACK_REQ and ACT_REQ are set to "01" and hence only the non-serving cell needs to send an acknowledgement and perform an action. The non-serving cell is thus aware that the user equipment will change its primary cell from F1 to F2 and acknowledges the Uplink Order via an E-HICH to the user equipment. There is no action required of the serving cell. Upon receiving the acknowledgement (E-HICH) from the non-serving cell, the user equipment proceed to change its primary carrier (note that this same Uplink Order will reach other non-serving cells if there is more than one non-serving cell).

Hence, the Uplink Order acts as a way to inform non-serving cells of a change in primary carrier. This saves the serving cell from having to inform the non-serving cells via the RNC 40 which can be time consuming and may temporary disrupt communication between the non-serving cell and the UE.

This approach enables more detailed orders or requests and can also act as a fast Layer 1 signaling to non-serving cells which alleviates problems with existing techniques which do not have enough bits to relay orders or requests that require additional information (e.g. which secondary carrier to deactivate in a 4C-HSDPA UE).

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of requesting a reconfiguration of a radio interface between user equipment and at least one base station in a wireless communications system, the method comprising the steps of:
determining said reconfiguration to be made by said at least one base station;
encoding an indication of said reconfiguration together with an indicator in a reconfiguration request message, said indicator indicating a response required by at least one recipient base station on receipt of said reconfiguration request message; and
transmitting said reconfiguration request message from said user equipment.

2. The method of claim 1, wherein said indicator comprises an acknowledgement request requesting at least one of a serving base station and non-serving base stations acknowledge receipt of said message.

3. The method of claim 1 or 2, wherein said indicator comprises an action request requesting at least one of a serving base station and non-serving base stations implement said reconfiguration.

4. The method of any preceding claim, comprising the step of spreading said request message with a predetermined spreading code indicative of said reconfiguration request message.

5. The method of any preceding claim, wherein said step of encoding comprises encoding an identifier indicative of said reconfiguration request message using a predetermined Enhanced Dedicated Channel Transport Format Combination Identifier.

6. The method of any preceding claim, wherein said reconfiguration request message comprises at least two parts and said step of transmitting comprises transmitting said first part on an uplink control channel and transmitting said second part on an uplink data channel.

7. The method of any preceding claim, wherein said first part comprises at least said indicator indicating said response and said second part comprises at least a cyclic redundancy check field.

8. The method of any preceding claim, wherein said uplink control channel comprises an Enhanced Dedicated Channel Dedicated Physical Control Channel (E-DPCCH) and said uplink data channel comprises at least one Enhanced Dedicated Channel Dedicated Physical Data Channel (E-DPDCH).

9. The method of any preceding claim, wherein said step of transmitting comprises transmitting said reconfiguration request message using at least one dedicated uplink reconfiguration request channel.

10. The method of any one of claims 1 to 7, wherein said step of encoding comprises encoding said indication of said reconfiguration and said indicator indicating said response required in a level two message, and said step of transmitting comprises transmitting comprises transmitting said level two message encoding said reconfiguration request message.

11. The method of any preceding claim, wherein said reconfiguration comprises at least one of activating at least one carrier, deactivating at least one carrier, changing primary carrier, changing of serving cell, change between normal transmission and discontinuous transmission, and change between normal reception and discontinuous reception.

12. The method of any preceding claim, comprising the step of:
receiving a request from a base station to reconfigure said radio interface and wherein said step of determining comprises determining said reconfiguration to be made by said at least one base station in response to said request.

13. User equipment operable to request a reconfiguration of a radio interface between said user equipment and at least one base station in a wireless communications system, said user equipment comprising:
determining logic operable to determine said reconfiguration to be made by said at least one base station;
encoding logic operable to encode an indication of said reconfiguration together with an indicator in a reconfiguration request message, said indicator indicating a response required by at least one recipient base station on receipt of said reconfiguration request message; and
transmission logic operable to transmit said reconfiguration request message from said user equipment.

14. A method of receiving a request to reconfigure a radio interface between user equipment and a base station in a wireless communications system, the method comprising the steps of:
receiving a reconfiguration request message from said user equipment;
decoding an indication of said reconfiguration together with an indicator from said reconfiguration request message, said indicator indicating a response required by said base station on receipt of said reconfiguration request message; and
determining from said indicator whether a response is required to said reconfiguration request message.

15. A base station operable to receive a request to reconfigure a radio interface between user equipment and a base station in a wireless communications system, the base station comprising:
reception logic operable to receive a reconfiguration request message from said user equipment;
decoding logic operable to decode an indication of said reconfiguration together with an indicator from said reconfiguration request message, said indicator indicating a response required by said base station on receipt of said reconfiguration request message; and
determining logic operable to determine from said indicator whether a response is required to said reconfiguration request message.

## Amended claims

### Amended claims in accordance with Rule 137(2) EPC.

**1.** A method, at a user equipment (50), of requesting a reconfiguration of a radio interface between user equipment and at least one base station (20) in a wireless communications system (10), the method comprising the steps of:
determining said reconfiguration to be mode by said at least one base station;
encoding an indication of said reconfiguration together with an indicator in a reconfiguration request message, said indicator indicating a response required by at least one recipient base station on receipt of said reconfiguration request message; and
transmitting said reconfiguration request message from said user equipment, wherein said reconfiguration request message comprises at least two parts and said step of transmitting comprises transmitting said first part on an uplink control channel and transmitting said second part on an uplink data channel.

**2.** The method of claim 1, wherein said indicator comprises an acknowledgement request requesting at least one of a serving base station and non-serving base stations acknowledge receipt of said message.

**3.** The method of claim 1 or 2, wherein said indicator comprises an action request requesting at least one of a serving base station and non-serving base stations implement said reconfiguration.

**4.** The method of any preceding claim, comprising the step of spreading said request message with a predetermined spreading code indicative of said reconfiguration request message.

**5.** The method of any preceding claim, wherein said step of encoding comprises encoding an identifier Indicative of said reconfiguration request message using a predetermined Enhanced Dedicated Channel Transport Format Combination Identifier.

**6.** The method of any preceding claim, wherein said first part comprises al least said indicator indicating said response and said second part comprises at least a cyclic redundancy check field.

**7.** The method of any preceding claim, wherein said uplink control channel comprises on Enhanced Dedicated Channel Dedicated Physical Control Channel (E-DPCCH) and said uplink data channel comprises at least one Enhanced Dedicated Channel Dedicated Physical Data Channel (E-DPDCH).

**8.** The method of any preceding claim, wherein said step of transmitting comprises transmitting said reconfiguration request message using at least one dedicated uplink reconfiguration request channel.

**9.** The method of any one of claims 1 to 6, wherein said step of encoding comprises encoding said indication of said reconfiguration and said indicator indicating said response required in a level two message, and said step of transmitting comprises transmitting comprises transmitting said level two message encoding said reconfiguration request message.

**10.** The method of any preceding claim, wherein said reconfiguration comprises at least one of activating at least one carrier, deactivating at least one carrier, changing primary carrier, changing of serving cell, change between normal transmission and discontinuous transmission, and change between normal reception and discontinuous reception.

**11.** The method of any preceding claim, comprising the step of:
receiving a request from a base station to reconfigure said radio interface and wherein said step of determining comprises determining said reconfiguration to be made by said at least one base station in response to said request.

**12.** User equipment (50) operable to request a reconfiguration of a radio interface between said user equipment and at least one base station (20) in a wireless communications system (10), said user equipment comprising:
determining logic operable to determine said reconfiguration to be made by said at least one base station;
encoding logic operable to encode an indication of said reconfiguration together with an indicator in a reconfiguration request message, said indicator indicating a response required by at least one recipient base station on receipt of said reconfiguration request message; and
transmission logic operable to transmit said reconfiguration request message from said user equipment, wherein said reconfiguration request message comprises at least two ports and said transmission logic is operable to transmit said first part on an uplink control channel and transmitting said second part on an uplink data channel.

**13.** A method, at a base station (20), of receiving a request to reconfigure a radio interface between user equipment (50) and a base station in a wireless communications system (10), the method comprising the steps of:
receiving a reconfiguration request message from said user equipment:
decoding an indication of said reconfiguration together with an indicator from said reconfiguration request message, said indicator indicating a response required by said base station on receipt of said reconfiguration request message; and
determining from said indicator whether a response is required to said reconfiguration request message, wherein said step of receiving comprises receiving said reconfiguration request message comprising at least two ports, said first part being received on an uplink control channel and said second pat being received on on uplink data channel.

**14.** A base station (20) operable to receive a request to reconfigure a radio interface between user equipment (50) and a base station in a wireless communications system (10), the base station comprising:
reception logic operable to receive a reconfiguration request message from said user equipment;
decoding logic operable to decode an indication of said reconfiguration together with an indicator from said reconfiguration request message, said indicator indicating a response required by said base station on receipt of said reconfiguration request message; and
determining logic operable to determine from said indicator whether a response is required to said reconfiguration request message, wherein said reception loggia is operable to receive said reconfiguration request message comprising at least two parts, said first part being received on an uplink control channel and said second part being received on an uplink data channel.

**15.** A computer program product operable, when executed on a computer, to perform the method steps of any one of claims 1 to 11 or 13.
